# EUROPEAN PATENT SPECIFICATION

(11) **EP 2 544 942 B1**
(45) Date of publication and mention of the grant of the patent: **26.04.2017**
(21) Application number: 11721387.6
(22) Date of filing: 04.03.2011
(51) Int. Cl.: B62D 33/067, B62D 21/15

(54) **TRUCK COMPRISING A CHASSIS AND A CAB PRESENT THEREON**
LASTKRAFTWAGEN MIT EINEM FAHRGESTELL UND EINER KABINE DARAUF
CAMION COMPRENANT UN CHÂSSIS ET UNE CABINE PRÉSENTE SUR CE DERNIER

(30) Priority: 24.03.2010 NL 2004457; 08.03.2010 NL 2004354
(43) Date of publication of application: 16.01.2013
(73) Proprietor: Daf Trucks N.V., 5643 TW Eindhoven (NL)
(72) Inventor: VREEDE, Rob, NL-5667BC Geldrop (NL)
(74) Representative: V.O.
(86) International application number: PCT/NL2011/050148
(87) International publication number: WO 2011/112081

(56) References cited:
- EP-A2- 0 972 699
- WO-A1-2006/100007
- DE-A1-102006 008 090
- JP-A- 8 230 724

## Description

### Field of the invention.

The invention relates to a truck comprising a chassis and a cab present thereon which is connected to the chassis by means of a single connecting construction, which connecting construction comprises at least one plate, as well as a strip which in lateral direction is positioned at right angles to the plate and with at least part of at least either of the two longitudinal edges is fixed to the plate, where a first end of the strip is connected to a connecting element that is connected through a flexible element to a transverse arm connected to a stabilizer bar, which stabilizer bar is connected to the cab, and where the plate is connected to the chassis.

### State of the art

A truck of this type is known from EP-A-1 996 446. In the event of a head-on collision with for example another truck, the cab of one truck smashes into the cab of the other truck while the chassis more often than not slides through from under the cab. During the collision the longitudinal edge of the strip is torn loose from the plate to which it is fixed. As a result, the cab may shift relative to the chassis over a distance of about twice the length of the strip and still continue to be connected to the chassis. With the collisions occurring most the distance over which the cab moves relative to the chassis is less than twice the length of the strip, as a result of which in these cases the cab continues to be connected to the chassis by means of the strip. In consequence, the cab is generally distorted less in a collision and remains on the chassis, so that it is better accessible for emergency services. In addition, with a collision the forces acting on the cab are reduced as a result of this.

### Summary of the invention.

It is an object of the invention to improve the known truck. For this purpose the truck according to the invention is characterised by features defined in the appended claims. In case of a collision a chassis connected breaking element will thus break first prior to the strip being torn loose from the plates. This breaking action requires force as a result of which the connecting construction in its turn is capable of absorbing more force. While the strip is torn loose, the connecting element is distorted and the flexible element distorted. This again takes up force, so that more collision energy is absorbed by the connecting construction. The connecting element and the breaking element form part of the mounting construction for mounting the stabilizer rod on the chassis. By fixing the tearable strip to the elements already present, there is no need for installing additional connecting means for connecting the strip to the cab.

The connecting construction preferably comprises a further plate which runs parallel to and is present at a distance from the plate, while the strip is fastened to the plates along part of each one of the two longitudinal edges. As a result, a force roughly twice as large is needed to tear the strip loose from the plates, so that it is thus possible for larger collision forces to be cushioned.

An embodiment of the truck according to the invention is characterised in that a fastening element is connected with its ends to the plates and between these ends is fixed to the other, second end of the strip. After the strip has been torn loose from the plates, with any further deformation the strip will distort the mounting element. This again requires force, so that the connecting construction can even absorb more force before breaking down.

### Brief description of the drawings.

The following description relating to the appended drawings, the whole given by way of non-limiting example of the truck according to the invention, will provide better understanding of how the invention can be realised, in which:
Fig. 1 gives a perspective view of a part of a truck in the place of the connection between the cab and the chassis;
Fig. 2 gives a side view of the part represented in Fig. 1 prior to a collision;
Fig. 3 shows the part represented in Fig. 2 after a collision; and
Fig. 4 shows the connecting construction in a state prior to and after a collision.

### Detailed description of the drawings

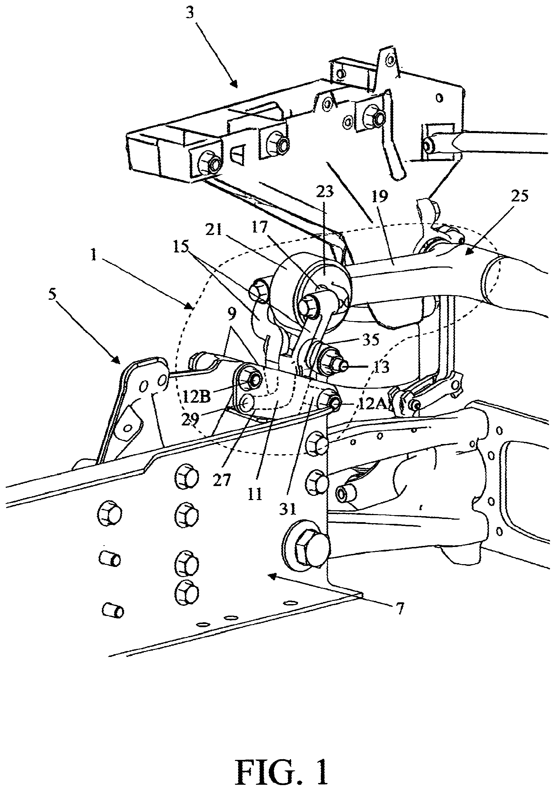

Fig. 1 gives a perspective view of part of a truck in the place of the connection between the cab and the chassis. On both sides of the truck there is a connecting construction 1. The truck has two coupling sections 3 on which the cab is mounted with its front side, as well as two bumper brackets 5 which are mounted on longitudinal beams 7 of the chassis. For clarity the cab has been omitted in the drawing figures.

The connecting construction 1 comprises two plates 9 running parallel to and at a distance from each other and with a strip 11 in between. This strip essentially extends between the plates 9 and is fixed to the two plates 9 with its two longitudinal eges 11B. The ends of the plates are connected to the chassis by means of bolts 12A and 12B and via the bumper bracket 5. The strip 11 is fixed with a first end 13 to a fastening element via two connecting elements 15. This fastening element is formed by a shaft 17 which is located in a central position in an eyelet 21 fixed to an end of an arm 19. This eyelet has an inner diameter that exceeds the diameter of the shaft. A flexible element 23 is present beween the eyelet and the shaft. The other end 25 of the arm 19 is connected to one of the coupling elements 3.

The strip 11 is fixed with the second end 27 to the cylinder sleeve of a fastening element 29 which extends in the plane of the strip 27 and is positioned at right angles to the longitudinal direction of the strip between the plates 9 and with its axial ends is connected to the plates.

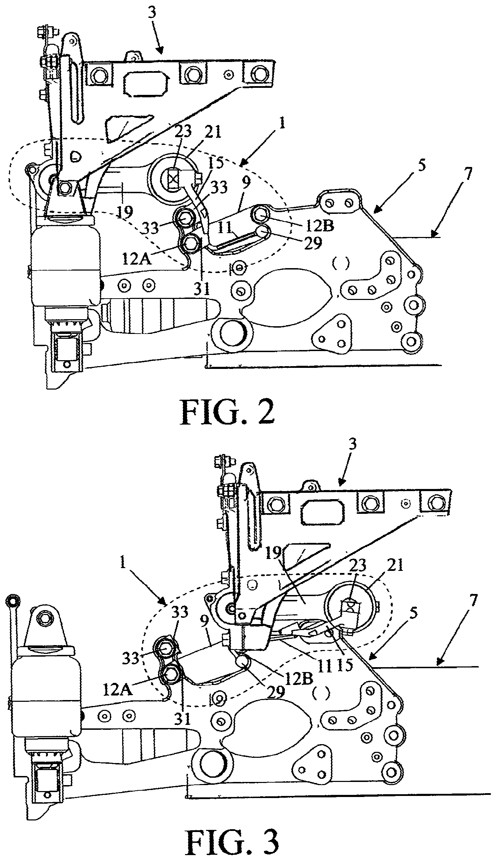

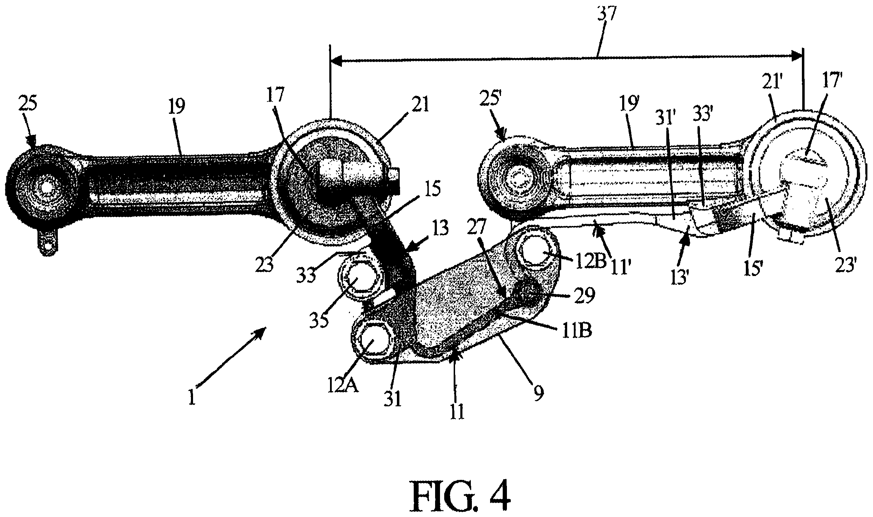

For illustrative purposes Figs. 2 and 3 give a side view of the part shown in Fig. 1 prior to and after a collision. Fig. 4 gives a detailed representation of this part in a state prior to and after a collision. In Fig. 4 the reference numerals provided with an apostrophe indicate the positions of the parts of the connecting construction after the collision.

In the place of and at a small distance from the first end 13 of the strip 11 breaking elements 31 and 33 are fixed to the strip. One of the breaking elements 31 is located between the two plates 9 and connected to the chassis by means of the bolt 12A. The other breaking element 33 is fixed to a further bolt 35 which is also connected to the chassis.

When there is a collision, the cab slides back relative to the chassis. The arm 19 connected to the cab will then be displaced relative to the plates 9 connected to the chassis from the position shown on the left in Fig. 4 over a distance 37 to the position shown on the right in Fig. 4. With this displacement first the two breaking elements 31 and 33 will give way. Then the longitudinal edges 11B of the strip 11 will come loose from the two plates 9 and while doing so bend the strip to the position referred to as 11'. The fastening element 29 will then be distorted relative to the plates 9 and also the connecting elements 15 and the shaft 17 will be distorted relative to the arm 19 while the flexible element 23 wil be twisted. During the displacement of the arm 19 from the left-hand to the rigt-hand position the connecting construction will absorb energy in many cases leading to the cab not coming loose from the chassis.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope of protection defined by the claims.

## Claims

1. Truck comprising a chassis (5, 7) and a cab present thereon which is connected to the chassis by means of a connecting construction (1), which connecting construction (1) comprises at least one plate (9), as well as a strip (11) which in a lateral direction is positioned perpendicular to the at least one plate (9) and with at least part of at least one of two longitudinal edges (11B) fixed to the at least one plate (9), wherein a first end (13) of the strip (11) is connected to a connecting element (15) that is connected to a transverse arm (19) connected to a stabilizer bar, which stabilizer bar is connected to the cab, and wherein the at least one plate (9) is connected to the chassis (5, 7), **characterised in that** at least a single chassis-connected breaking element (31, 33) is fixed to the connecting element (15), **in that** the connecting element (15) is connected to the arm (19) through a shaft (17) attached to the connecting element (15), **in that** the first end (13) of the strip (11) is fixed to the shaft (17), **in that** the shaft (17) is located in a central position in an eyelet (21) fixed to an end of the arm (19), which eyelet (21) has an inner diameter exceeding a diameter of the shaft (17), **in that** a flexible element (23) is present between the eyelet (21) and the shaft (17), **in that** the connecting element (15) and the shaft (17), in case of a collision to absorb collision energy, are adapted to be distorted relative to the arm (19) by the single breaking element (31, 33) being arranged to break first, prior to the strip (11) being allowed to be torn loose from the at least one plate (9), while the flexible element (23) is twisted.

2. Truck as claimed in claim 1, **characterized in that** the connecting construction (1) comprises a further plate (9) which runs parallel to, and is present at a distance from the one plate (9), and **in that** the strip (11) is attached to both the one and the further plates (9) along part of each one of the two longitudinal edges (11B).

3. Truck as claimed in claim 2, **characterised in that** a fastening element (29) is connected with its ends to the plates (9) and between these ends is fixed to a second end (27) of the strip (11).

4. Truck as claimed in claim 3, **characterised in that** the at least single breaking element comprises one breaking element (31) and another breaking element (33), and the connecting element (15) comprises two connecting elements, **in that** the longitudinal edges (11B) of the strip (11) are arranged to come loose from the one and the further plates (9), when in a collision the arm (19) connected to the cab displaces relative to the plates (9) connected to the chassis (5, 7), upon the two breaking elements (31, 33) giving way, and while doing so the strip (11) bends, **in that** the fastening element (29) is arranged to be distorted relative to the plates (9), and **in that** the two connecting elements (15) and the shaft (17) are arranged to be distorted relative to the arm (19).

5. Truck according to one of claims 3 or 4, **characterised in that** the at least single breaking element comprises one breaking element (31) and another breaking element (33), **in that** at and near the first end (13) of the strip (11) two breaking elements (31, 33) are attached to the strip (11), which breaking elements (31, 33) are arranged to give way, when in a collision the arm (19) connected to the cab displaces relative to the plates (9) connected to the chassis (5, 7), and **in that** one of the breaking elements (31) is located between the two plates (9) and connected to the chassis (5, 7) by means of a bolt (12 A), and **in that** the other breaking element (33) is fixed to a further bolt (35), which is also connected to the chassis (5, 7).

6. Truck according to one of claims 1 to 5, wherein another end of the arm (19) is connected to one of two coupling elements (3) on which the cab is mounted.

## Patentansprüche

1. Lastkraftwagen, umfassend ein Fahrgestell (5, 7) und eine Kabine darauf, die mit dem Fahrgestell mittels einer Verbindungskonstruktion (1) verbunden ist, welche Verbindungskonstruktion (1) mindestens eine Platte (9) umfasst sowie einen Streifen (11), der in lateraler Richtung senkrecht zu der mindestens einen Platte (9) positioniert ist und mit mindestens einem Teil von mindestens einer von zwei Längskanten (11B) an der mindestens einen Platte (9) befestigt ist, wobei ein erstes Ende (13) des Streifens (11) mit einem Verbindungselement (15) verbunden ist, das mit einem Querarm (19) mit einer Stabilisatorstange verbunden ist, welche Stabilisatorstange mit der Kabine verbunden ist, und wobei die mindestens eine Platte (9) mit dem Fahrgestell (5, 7) verbunden ist, **dadurch gekennzeichnet, dass** mindestens ein einzelnes fahrgestellverbundenes Brechelement (31, 33) an dem Verbindungselement (15) befestigt ist, dass das Verbindungselement (15) mit dem Arm (19) durch einen an dem Verbindungselement (15) befestigten Schaft (17) verbunden ist, dass das erste Ende (13) des Streifens (11) an dem Schaft (17) befestigt ist, dass der Schaft (17) in einer zentralen Position in einer Öse (21), befestigt an einem Ende des Arms (19), befestigt ist, welche Öse (21) einen Innendurchmesser hat, der einen Durchmesser des Schafts (17) übersteigt, dass ein flexibles Element (23) zwischen der Öse (21) und dem Schaft (17) vorgesehen ist, dass das Verbindungselement (15) und die Welle (17) im Fall einer Kollision zum Absorbieren der Kollisionsenergie geeignet sind, um in Bezug auf den Arm (19) verbogen zu werden durch das einzelne Brechelement (31, 33), das angeordnet ist, um zuerst zu brechen, bevor es dem Streifen (11) erlaubt wird, von der mindestens einen Platte (9) losgerissen zu werden, während das flexible Element (23) verdreht wird.

2. Lastkraftwagen nach Anspruch 1, **dadurch gekennzeichnet, dass** die Verbindungskonstruktion (1) eine weitere Platte (9) umfasst, die parallel zu der einen Platte (9) verläuft und in einem Abstand von dieser vorgesehen ist, und dass der Streifen (11) an sowohl der ersten als auch an der weiteren Platte (9) entlang eines Teils von jeder der zwei Längskanten (11B) befestigt ist.

3. Lastkraftwagen nach Anspruch 2, **dadurch gekennzeichnet, dass** das Befestigungselement (29) mit seinen Enden an den Platten (9) verbunden ist und zwischen diesen Enden an einem zweiten Ende (27) des Streifens (11) befestigt ist.

4. Lastkraftwagen nach Anspruch 3, **dadurch gekennzeichnet, dass** das mindestens einzelne Brechelement ein Brechelement (31) und ein anderes Brechelement (33) umfasst, und das Verbindungselement (15) zwei Verbindungselemente umfasst, dass die Längskanten (11B) des Streifens (11) angeordnet sind, um sich von der einen und der weiteren Platte (9) zu lösen, wenn in einer Kollision der mit der Kabine verbundene Arm (19) sich in Bezug auf die mit dem Fahrgestell (5, 7) verbundenen Platten (9) verschiebt, woraufhin die zwei Brechelemente (31, 33) nachgeben, und während dies geschieht der Streifen (11) sich biegt, dass das Befestigungselement (29) angeordnet ist, um in Bezug auf die Platten (9) verzogen zu werden, und dass die zwei Verbindungselemente (15) und die Welle (17) angeordnet sind, um in Bezug auf den Arm (19) verzogen zu werden.

5. Lastkraftwagen nach einem der Ansprüche 3 oder 4, **dadurch gekennzeichnet, dass** das mindestens einzelne Brechelement ein Brechelement (31) und ein anderes Brechelement (33) umfasst, dass an und nahe dem ersten Ende (13) des Streifens (11) zwei Brechelemente (31, 33) an dem Streifen (11) befestigt sind, welche Brechelemente (31, 33) angeordnet sind, um nachzugeben, wenn in einer Kollision der mit der Kabine verbundene Arm (19) sich in Bezug auf die mit dem Fahrgestell (5, 7) verbundenen Platten (9) verschiebt, und dass eines der Brechelemente (31) zwischen den zwei Platten (9) angeordnet und mittels eines Bolzens (12 A) mit dem Fahrgestell (5, 7) verbunden ist, und dass das andere Brechelement (33) an einem weiteren Bolzen (35), der ebenfalls mit dem Fahrgestell (5, 7) verbunden ist, befestigt ist.

6. Lastkraftwagen nach einem der Ansprüche 1 bis 5, wobei ein anderes Ende des Armes (19) mit einem von zwei Kopplungselementen (3), auf denen die Kabine montiert ist, verbunden ist.

## Revendications

1. Camion comprenant un châssis (5, 7) et une cabine présente sur ce dernier reliée au châssis au moyen d'une structure de raccordement (1), laquelle structure de raccordement (1) comprend au moins une plaque (9), ainsi qu'une bande (11) qui, dans une direction latérale,
est positionnée perpendiculairement à la au moins une plaque (9) et, avec au moins une partie d'au moins l'un des deux bords longitudinaux (11B) fixés sur la au moins une plaque (9), dans lequel une première extrémité (13) de la bande (11) est raccordée à un élément de raccordement (15) relié à un bras transversal (19) raccordé à une barre stabilisatrice, laquelle barre stabilisatrice est raccordée à la cabine, et dans lequel la au moins une plaque (9) est reliée au châssis (5, 7), **caractérisé en ce qu'**au moins un élément de rupture unique raccordé au châssis (31, 33) est fixé à l'élément de raccordement (15), **en ce que** l'élément de raccordement (15) est relié au bras (19) par le biais d'un arbre (17) fixé à l'élément de raccordement (15), **en ce que** la première extrémité (13) de la bande (11) est fixée à l'arbre (17), **en ce que** l'arbre (17) est positionné dans une position centrale dans un oeillet (21) fixé à une extrémité du bras (19), lequel oeillet (21) a un diamètre interne dépassant le diamètre de l'arbre (17), **en ce qu'**un élément flexible (23) est présent entre l'oeillet (21) et l'arbre (17), **en ce que** l'élément de raccordement (15) et l'arbre (17), en cas de collision, afin d'absorber l'énergie de la collision, sont adaptés pour être déformés par rapport au bras (19) par l'élément de rupture (31, 33) unique, agencé pour casser en premier, avant que la bande (11) ne soit arrachée de la au moins une plaque (9), alors que l'élément flexible (23) est tordu.

2. Camion selon la revendication 1, **caractérisé en ce que** la structure de raccordement (1) comprend une autre plaque (9) qui s'étend parallèlement à, et se trouve à une distance de la une plaque (9) et **en ce que** la bande (11) est fixée à la fois à la une plaque et à l'autre plaque (9), le long d'une partie de chacun des deux bords longitudinaux (11B).

3. Camion selon la revendication 2, **caractérisé en ce qu'**un élément de fixation (29) est raccordé avec ses extrémités aux plaques (9) et est fixé à une seconde extrémité (27) de la bande (11) entre ces extrémités.

4. Camion selon la revendication 3, **caractérisé en ce que** le au moins un élément de rupture unique comprend un élément de rupture (31) et un autre élément de rupture (33), et l'élément de raccordement (15) comprend deux éléments de raccordement, **en ce que** les bords longitudinaux (11B) de la bande (11) sont agencés pour être desserrés de la une plaque et de l'autre plaque (9), quand, lors d'une collision, le bras (19) raccordé à la cabine se déplace par rapport aux plaques (9) reliées au châssis (5, 7), après que les deux éléments de rupture (31, 33) se sont cassés, et ce faisant, la bande (11) se plie, **en ce que** l'élément de fixation (29) est agencé pour être déformé par rapport aux plaques (9) et **en ce que** les deux éléments de raccordement (15) et l'arbre (17) sont agencés pour être déformés par rapport au bras (19).

5. Camion selon l'une des revendications 3 ou 4, **caractérisé en ce que** le au moins un élément de rupture unique comprend un élément de rupture (31) et un autre élément de rupture (33), **en ce qu'**au niveau de et à proximité de la première extrémité (13) de la bande (11), deux éléments de rupture (31, 33) sont fixés à la bande (11), lesquels éléments de rupture (31, 33) sont agencés pour céder, lors d'une collision, le bras (19) raccordé à la cabine se déplace par rapport aux plaques (9) raccordées au châssis (5, 7), et **en ce que** l'un des éléments de rupture (31) est positionné entre les deux plaques (9) et raccordé au châssis (5, 7) au moyen d'un boulon (12A) et **en ce que** l'autre élément de rupture (33) est fixé à un autre boulon (35), également raccordé au châssis (5, 7).

6. Camion selon l'une des revendications 1 à 5, dans lequel une autre extrémité du bras (19) est raccordée à l'un des deux éléments de couplage (3) sur lequel la cabine est montée.
